# EUROPÄISCHE PATENTSCHRIFT

(11) **EP 1 642 098 B1**
(45) Veröffentlichungstag und Bekanntmachung des Hinweises auf die Patenterteilung: **02.01.2008**
(21) Anmeldenummer: 04740130.2
(22) Anmeldetag: 21.06.2004
(51) Int. Cl.: G01J 3/46, G01N 21/898

(54) **VERFAHREN UND ANORDNUNG ZUR MESSTECHNISCHEN ERFASSUNG DER UNTERSCHIEDE IN DEM VISUELL WAHRGENOMMENEN FARBEINDRUCK ZWISCHEN EINER MEHRFARBIG GEMUSTERTEN OBERFLÄCHE EINER REFERENZ UND EINER MEHRFARBIG GEMUSTERTEN OBERFLÄCHE EINES PRÜFLINGS**
METHOD AND SYSTEM FOR THE METROLOGICAL DETECTION OF DIFFERENCES IN THE VISUALLY PERCEIVED COLOR IMPRESSION BETWEEN A MULTICOLORED PATTERNED SURFACE OF A REFERENCE AND A MULTICOLORED PATTERNED SURFACE OF A SPECIMEN
PROCEDE ET DISPOSITIF PERMETTANT DE DETECTER DE MANIERE METROLOGIQUE LES DIFFERENCES DE PERCEPTION VISUELLE DES COULEURS ENTRE UNE SURFACE A MOTIFS MULTICOLORES D'UNE PIECE DE REFERENCE, ET UNE SURFACE A MOTIFS MULTICOLORES D'UNE PIECE D'ESSAI

(30) Priorität: 24.06.2003 DE 10328322
(43) Veröffentlichungstag der Anmeldung: 05.04.2006
(73) Patentinhaber: Massen Machine Vision Systems GmbH, 78467 Konstanz (DE)
(72) Erfinder: DIEHL, Hans-Peter, 78462 Konstanz (DE)
(74) Vertreter: Degwert, Hartmut
(86) Internationale Anmeldenummer: PCT/EP2004/006695
(87) Internationale Veröffentlichungsnummer: WO 2004/113855

(56) Entgegenhaltungen:
- WO-A-03/031956
- US-A- 5 155 558
- US-A- 5 809 165
- US-A- 6 035 065
- US-B1- 6 483 938

## Beschreibung

Die vorliegende Erfindung betrifft ein Verfahren zur meßtechnischen Erfassung der Unterschiede in dem visuell wahrgenommenen Farbeindruck zwischen einer mehrfarbig gemusterten Oberfläche einer Referenz und einer mehrfarbig gemusterten Oberfläche eines Prüflings, bei dem mit einem ortsauflösenden Sensor, der die zu beurteilende Oberfläche erfaßt, Signale gewonnen werden, und anhand der gewonnenen Signale mindestens eines der folgenden, die Farbeigenschaften der mehrfarbig gemusterten Oberfläche beschreibenden Merkmale bestimmt wird:
- eine statistische Beschreibung der Eigenschaften der aufgebrachten unterschiedlichen Farben,
- die geometrische Verteilung der auf der Oberfläche aufgebrachten unterschiedlichen Farben,
- Formmerkmale der jeweils zu einer Farbe gehörenden einfarbigen Elemente des mehrfarbigen Musters,
- Formmerkmale von visuell unterscheidbaren Elementen des mehrfarbigen Musters.

Die statistische Beschreibung erfolgt mit radiometrischen Mitteln durch in einem geeignet gewählten Farbraum gebildete Farbhistogramme und/oder den daraus abgeleiteten Kennwerten wie Mittelwerte, Varianzen und ähnliche dem Fachmann der Farbtexturen bekannte Beschreibungen.

Die vorliegende Erfindung betrifft ferner eine Anordnung zur meßtechnische Erfassung der Unterschiede in dem visuell wahrgenommenen Farbeindruck zwischen einer mehrfarbig gemusterten Oberfläche einer Referenz und einer mehrfarbig gemusterten Oberfläche eines Prüflings, mit einer Lichtquelle von im wesentlich konstanter Intensität und spektraler Verteilung zur Beleuchtung der mehrfarbig gemusterten Oberfläche des Prüflings, mit einem ortsauflösenden Sensor zur Erfassung der beleuchteten Oberfläche, und mit einer Recheneinheit, in welcher aus den Signalen des ortsauflösenden Sensors meßtechnische Werte bestimmt werden, die die Farbeigenschaften der mehrfarbig gemusterten Oberfläche beschreiben.

Die Überwachung des Farbeindrucks von mehrfarbig gemusterten Produkten, wie beispielsweise von Laminat-Fußbodendekoren, keramischen Fliesen oder drucktechnisch hergestellten farbig gemusterten Paneelen, in der Produktionslinie ist ein heute noch weitgehend meßtechnisch ungelöstes Problem und wird umständlich, ungenau, personalintensiv und mit hohen Kosten durch eine rein visuelle Inspektion durchgeführt. Der wesentliche Grund hierfür liegt in der Tatsache begründet, daß die klassische Kolorimetrie prinzipiell auf einfarbige Flächen begrenzt ist, und zwar unabhängig davon, ob sie Spektrometer verwendet oder Mehrfarbfilter-Sensoren. Diese klassische Meßtechnik erfaßt lediglich gemittelte Farbwerte, nämlich gemittelt über die Apertur des Sensors oder Spektrometers. Sie ist damit nicht geeignet, mehrfarbig gemusterte Oberflächen auszumessen.

Es ist aus der EP 0 692 089 B1 bekannt, mit Hilfe bildgebender Sensoren Farbbilder der zu überwachenden, mehrfarbig gemusterten Produktoberflächen zu erfassen und durch Vergleich der Farbhistogramme einer Referenz mit den Farbhistogrammen des Prüflings Abweichungen in der Mehrfarbigkeit zu erkennen.

Der Farbeindruck des menschlichen Sehsystems wird aber nicht nur von den physikalisch meßbaren unterschiedlichen Farben und ihren Häufigkeiten bestimmt. So ist es z.B. beim anspruchsvollen Druck mehrfarbiger Laminatdekore bekannt, welche oft komplizierte natürliche Oberflächen wie beispielsweise Holz oder Naturstein nachahmen, daß Instabilitäten im Produktionsprozeß zu sichtbaren Farbverschiebungen führen, welche meßtechnisch als Farbdifferenzen oder als Differenzen der Farbstatistiken nicht nachweisbar sind. Untersuchungen haben ergeben, daß Abweichungen in der Bildschärfe von mehrfarbig gemusterten Oberflächen vom menschlichen Sehsystem oft als eine Farbverschiebung, wie z.B. eine Rot-Stichigkeit, wahrgenommen und als solche angemahnt werden. Die eigentliche physikalische Veränderung gegenüber der Referenz, nämlich die unterschiedliche Bildschärfe aufgrund von Registrierungsproblemen oder Problemen beim Verzug der bedruckten Vorlage in den jeweiligen Druckwerken, wird aber vom Menschen nicht als solche erkannt.

Die Bildschärfe kann meßtechnisch durch verschiedene Verfahren bestimmt werden, wie z.B.:
a) Anhand der Bandbreite der im Bild enthaltenen Ortsfrequenzen. Je schärfer das Bild ist, desto höhere Ortsfrequenzen treten im Ortsfrequenz-Spektrum auf.
b) Anhand der Gradienten des Helligkeitsbildes. Je schärfer das Bild ist, desto steiler sind hell-dunkel Übergänge im Ortsbild.

Dem Fachmann der Optik und der Bildverarbeitung sind diese und andere Verfahren bekannt.

US 6,483,938 B1 offenbart ein Verfahren zur optischen Kontrolle einer Wafer-Oberfläche bei der Halbleiterproduktion zum automatisierten Erkennen von Defekten. Hierbei wird die Oberfläche beleuchtet und über eine Kamera werden digitale Abbilder zunächst von Referenzobjekten und dann von Testobjekten erstellt. Ein Bildbearbeitungssystem lokalisiert und klassifiziert auf der Wafer-Oberfläche vorhandene Defekte unter Auswertung von Kriterien wie Flächengröße, Farbe, Oberflächenbeschaffenheit und Kantensteilheit.

US 5,809,165 offenbart ein Verfahren zur Farbkontrolle in einem Produktionsprozeß für nichtebene, reflektierende Oberflächen. Dabei erfaßt eine Farbkamera die zu inspizierende Oberfläche und die so erstellten Bilder werden in einem Computer ausgewertet. Hierfür wird ein dreidimensionales Histogramm der vorkommenden Farbvektoren erstellt.

US 6,035,065 offenbart ein Verfahren zur rechnerischen Korrektur von an verschiedenen Ausgabegeräten ausgegebenen Farbbildern, so daß sie für das menschliche Auge sichtbar die gleichen Farben aufweisen und die gleiche Bildschärfe besitzen.

Die klassische mittelnde Kolorimetrie kann prinzipiell keine Bildschärfe messen, da sie nur die Ortsfrequenz "Null", d.h. den strukturlosen Mittelwert erfaßt.

Der Vergleich von Farbhistogrammen, welche aus Farbkamerabildern gewonnen werden und in dem oben genannten Patent EP 0 692 089 B1 beschrieben ist, ist ebenfalls unabhängig von den in den Farbbildern enthaltenen Ortsfrequenzen und gibt daher keine Aussage über die Bildschärfe.

Die Produktion von Vorlagen mit einer mangelhaften, visuell wahrgenommenen Farbdrift ist mit hohen wirtschaftlichen Verlusten verbunden, insbesondere dann, wenn diese in der Regel sehr kleinen Abweichungen erst nach dem Verlegen beim Kunden auffällig werden und dann zu kostspieligen Rücknahmeaktionen führen.

Auch der derzeitige Anfahrvorgang dieser Druckprozesse ist schwierig und langwierig, da immer wieder Proben genommen werden müssen, um visuell die Stabilität bzw. Übereinstimmung mit einer Referenz zu prüfen.

Es besteht daher ein hohes wirtschaftliches und technisches Interesse an einem Meßverfahren, welches in der Lage ist, den visuell wahrnehmbaren Farbeindruck von mehrfarbig gemusterten Vorlagen in oder nahe an der Produktion zu messen und zu überwachen, und zwar unabhängig davon, ob die physikalischen Ursachen in einer Veränderung der Farben und ihren Statistiken oder in einer Veränderung der Schärfe des mehrfarbig gemusterten Druckbildes liegen.

Dies wird erfindungsgemäß dadurch erreicht, daß gleichzeitig zur Bestimmung der die Farbeigenschaften beschreibenden Merkmale anhand der gewonnenen Signale die Bildschärfe der Muster bestimmt wird, daß die Werte für die die Farbeigenschaften beschreibenden Merkmale des Prüflings mit den entsprechenden vorgegebenen Werten der Referenz und die die Bildschärfe bestimmenden Werte des Prüflings mit den entsprechenden vorgegebenen Werten der Referenz verglichen werden, und daß diese Abweichungen zur meßtechnischen Beurteilung der visuell wahrnehmbaren Unterschiede in dem Farbeindruck als separate Abweichungsmaße oder kombiniert als gemeinsames Abweichungsmaß angezeigt werden.

Da das Abweichungsmaß zwischen dem Prüfling und der Referenz sowohl hinsichtlich der die Farbeigenschaften beschreibenden Merkmale als auch hinsichtlich der Bildschärfe bestimmt und angezeigt wird, ist ersichtlich, ob eventuelle Unterschiede im visuellen Farbeindruck durch eine unterschiedliche Bildschärfe oder durch unterschiedliche physikalische Farbeigenschaften bedingt sind. Entsprechende Maßnahmen, um den visuell wahrgenommenen Farbeindruck der Prüflinge an den der Referenz anzugleichen, können dann unmittelbar vorgenommen werden.

Gemäß einer bevorzugten Variante werden zusätzlich zur separaten Anzeige der Abweichungsmaße die Abweichungsmaße zu einem dem visuellen Farbeindruck entsprechenden gemeinsamen Abweichungsmaß kombiniert und angezeigt. Die Kombination der die Farbeigenschaften erfassenden Messungen mit den Messungen der Bildschärfe geschieht bevorzugterweise durch eine parametrisierbare mathematische Funktion, vorzugsweise durch ein Polynom, dessen Parameter experimentell bestimmt wurden.

Gemäß einer bevorzugten Variante wird die Bildschärfe aus der Helligkeit der Signale bestimmt. Da die gemusterte Oberfläche ortsaufgelöst erfaßt wird, können anhand der Helligkeitssignale die hell-dunkel Übergänge im Ortsbild bestimmt werden. Je schärfer das Bild ist, desto steiler sind diese Übergänge,

Durch die vorliegende Erfindung wird ferner eine Anordnung bereitgestellt, mittels der der visuell wahrnehmbare Farbeindruck von mehrfarbig gemusterten Vorlagen in oder nahe an der Produktion gemessen und überwacht werden kann, und zwar unabhängig davon, ob die physikalischen Ursachen in einer Veränderung der Farben und ihren Statistiken oder in einer Veränderung der Schärfe des mehrfarbig gemusterten Druckbildes liegen.

Dies wird erfindungsgemäß dadurch erreicht, daß aus den Signalen des ortsauflösenden Sensors ferner Werte bestimmt werden, die die Bildschärfe der mehrfarbig gemusterten Oberfläche beschreiben, und daß eine Anzeigeeinheit zur Anzeige von Abweichungsmaßen vorgesehen ist, die durch einen Vergleich der die Farbeigenschaften beschreibenden Werte des Prüflings mit den entsprechenden vorgegebenen Werten der Referenz sowie der die Bildschärfe beschreibenden Werte des Prüflings mit den entsprechenden vorgegebenen Werten der Referenz gebildet werden.

Weitere Merkmale und vorteilhafte Ausgestaltungen ergeben sich aus den Unteransprüchen.

Das Verfahren und die Anordnung soll im folgenden am konkreten Beispiel der Überwachung des anspruchsvollen Drucks von mehrfarbig gemusterten Dekorfolien für beispielsweise Bodenlaminate, Möbellaminate oder Wandpaneele verdeutlicht werden. Dieses Beispiel ist nicht einschränkend zu verstehen, sondern läßt sich auf alle mehrfarbig gemusterten Oberflächen anwenden, bei denen Instabilitäten des Produktionsprozesses sowohl zu physikalischen Farbabweichungen als auch zu Abweichungen in der Bildschärfe des erzeugten Musters führen können. Dies ist regelmäßig bei allen Druckprozessen der Fall, kann aber auch bei der Erzeugung mehrfarbig gemusterter Oberflächen durch Einstreuen von mehrfarbigen Partikeln in einen homogenen Kunststoff entstehen.

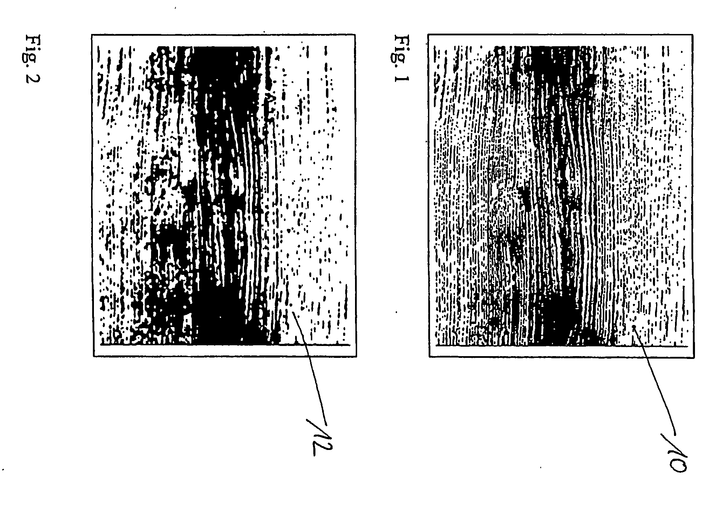

Der Erfindungsgedanke wird anhand der Figuren 1 bis 3 erläutert. In diesen zeigen:
- Figur 1 schematisch in einer schwarz/weiß Darstellung das Muster einer mehrfarbigen, eine Holzoberfläche imitierenden Dekorfolie für Fußbödenlaminate,
- Figur 2 schematisch in einer schwarz/weiß Darstellung eine Verminderung der Bildschärfe des Musters von Figur 1 in einer stark überzeichneten Darstellung, beispielsweise hervorgerufen durch eine mangelhafte Registrierung der einzelnen Druckstufen und/oder durch lokale Verzüge des bedruckten Papiers in der Druckstufe,

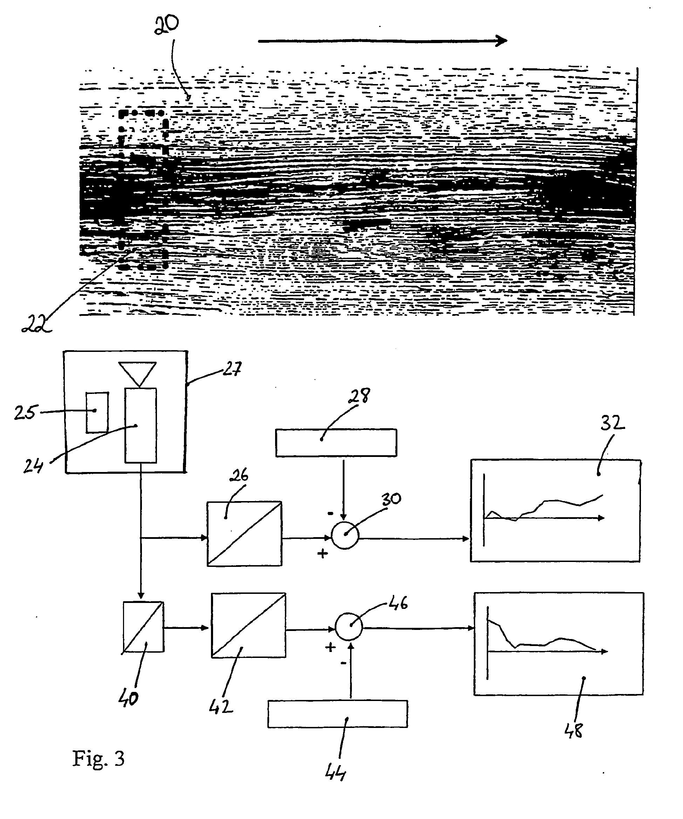

- Figur 3 beispielhaft, wie durch eine Farbkamera ortsaufgelöst ein Ausschnitt der Dekorfolie erfaßt wird und gleichzeitig aus den Bildsignalen der Kamera eine Farbstatistik gewonnen, mit einer Referenz verglichen und das Abweichungsmaß angezeigt wird, als auch aus dem rekonstruierten Helligkeitsbild ein Maß für die lokale Bildschärfe gewonnen, mit einer Referenz verglichen und das den Unterschied in der Bildschärfe beschreibende Abweichungsmaß angezeigt wird.

Die drucktechnische Herstellung von einem Laminatdekor, welches eine natürliche, mehrfarbige Holzoberfläche imitiert, ist ein anspruchsvoller Mehrfarben-Prozeß, bei welchem bereits leichte Produktionsdriften zu einer für das menschliche Sehsystem auffälligen Farbverschiebung führten. Figur 1 zeigt in einer schwarz/weiß Darstellung eine typische mehrfarbige Holzmaserung mit sowohl einer korrekten Farbwiedergabe als auch einer korrekten Bildschärfe. Die Oberfläche 10 mit dieser Holzmaserung entspricht der mehrfarbig gemusterten Oberfläche einer Referenz gemäß der vorliegenden Erfindung. Figur 2 zeigt im Vergleich hierzu (wieder in schwarz/weiß Darstellung) die Holzmaserung aus Figur 1 mit unveränderten Farben, aber einer (hier aus Gründen der Anschaulichkeit) extrem überzeichneten Bildunschärfe. Die Oberfläche 12 mit dieser Maserung 12 gehört zu einem Prüfling. Veränderte Bildschärfen entstehen beim Mehrfarbendruck insbesondere durch zwei Einflußgrößen:
a) durch die Registrierung (Ausrichtung) der einzelnen Druckzylinder;
b) durch die Dehnung und Verzüge der zu bedruckenden Folie in den Druckwerken.

Es ist eine Besonderheit des menschlichen Farbsehens, daß bei mehrfarbig gemusterten Flächen Veränderungen in der Bildschärfe nicht als solche wahrgenommen werden, sondern als eine Farbverschiebung (z.B. als eine leicht rötlichere Maserung) erscheint. Bei der Produktabnahme wird daher ein Farbfehler angemahnt, obwohl die tatsächliche Ursache nicht im Farbauftrag, der Farbmischung oder der Farbkonstanz der Pigmente liegt, sondern ganz woanders, nämlich in der veränderten Registrierung der Druckwerke oder den andersartigen Verzügen der bedruckten Folie.

Es ist daher außerordentlich wichtig, die tatsächliche physikalische Ursache meßtechnisch bei der Produktion mit zu erfassen.

Figur 3 verdeutlicht anhand eines bevorzugten Beispiels die einzelnen Verfahrensschritte gemäß der vorliegenden Erfindung und Komponenten der erfindungsgemäßen Anordnung. Das von links nach rechts in Pfeilrichtung bewegte, mehrfarbig mit einem Holzmuster bedruckte Dekorpapier 20 wird in einem Abschnitt 22 mit einem bildgebenden, farbtüchtigen Sensor 24, wie z.B. einer Farbzeilenkamera (einer Anordnung aus mehreren benachbarten diskreten Farbsensoren), abgetastet. Das bedruckte Dekorpapier 20 wird von einer Lichtquelle 25 von im wesentlichen konstanter Intensität und spektraler Verteilung beleuchtet. Aus den gewonnenen Farbsignalen werden kontinuierlich in einer Recheneinheit 26 mit aus der Bildverarbeitung bekannten Verfahren statistische Beschreibungen der Mehrfarbigkeit berechnet, beispielsweise Farbhistogramme, welche mit den in einer Einheit 28 gespeicherten Referenzhistogrammen in einer Vergleichseinheit 30 verglichen werden. Die Abweichungsmaße, die durch den Vergleich der Farbhistogramme von der Referenz und dem Prüfling entstehen, werden auf einer Anzeige 32 angezeigt.

Die Lichtquelle 25 und der bildgebende Farbsensor 24 sind gemäß einer bevorzugten Anordnung in einem Meßkopf 27 zusammengefaßt. Bevorzugterweise weist der Meßkopf 27 Kalibriereinrichtungen zur automatischen Rekalibrierung des Meßkopfes 27 auf. Bei flachen bewegten bahnförmigen Produkten ist der Meßkopf 27 bevorzugterweise dicht über der Oberfläche positioniert, so daß kein die Messung verfälschendes Fremdlicht aus der Umgebung die beleuchtete Oberfläche erfaßt.

Die Signale des bildgebenden Sensors 24 können beispielsweise in den IHS-Farbraum (I = "Intensity" = Helligkeit; H = "Hue" = Farbton; S = "Saturation" = Sättigung) transformiert werden. Die Farbkontrolle kann dann durch Darstellung der unterschiedlichen Farbvektoren als Punktewolke im dreidimensionalen IHS-Raum erfolgen. Als weiterer Parameter kann die Häufigkeit der einzelnen Farbvektoren berücksichtigt werden. Zusätzlich oder alternativ dazu können zur statistischen Beschreibung der Eigenschaften der aufgebrachten Farben aus den Parametern Kennwerte wie beispielsweise Mittelwerte und Varianzen abgeleitet werden.

Anstatt oder zusätzlich zu einer statistischen Beschreibung der Eigenschaften der aufgebrachten unterschiedlichen Farben kann auch anhand der gewonnenen Signale die geometrische Verteilung der auf der Oberfläche aufgebrachten unterschiedlichen Farbmuster bestimmt werden, beispielsweise durch lokale Dichtemaße. Ein möglicher Parameter zur Beschreibung der geometrischen Verteilung ist die lokale Orientierung der Farbmuster, oder auch ähnliche dem Fachmann bekannte geometrische Texturmerkmale. Es können auch Formmerkmale der jeweils zu einer Farbe gehörenden einfarbigen Elemente des mehrfarbigen Musters und/oder Formmerkmale von visuell unterscheidbaren Elementen des mehrfarbigen Musters bestimmt werden.

Gleichzeitig werden mit einer Konvertierungseinheit 40 die Farbsignale in Helligkeitssignale umgewandelt, aus welchen eine zweite Recheneinheit 42 mit aus der Optik und Bildverarbeitung bekannten Verfahren kontinuierlich ein Maß für die Schärfe des Druckbildes ermittelt und mit den in einer zweiten Einheit 44 gespeicherten Referenzwerten in einer zweiten Vergleichseinheit 46 vergleicht. Die Abweichungsmaße, die durch einen Vergleich der Werte der Referenz und des Prüflings gebildet werden, werden mittels einer zweiten Anzeige 48 angezeigt.

Durch die gleichzeitige Darstellung der Abweichung in der Mehrfarbigkeit und der Veränderung in der Bildschärfe können Veränderungen und deren Ursachen unmittelbar während der Produktion erkannt werden.

Es können auch mehrere ortsauflösende Sensoren vorgesehen sein, die die gesamte oder nur einen Ausschnitt der zu beurteilenden Oberflächen erfassen.

Anstatt mittels der Helligkeit der Signale kann die Bildschärfe auch anhand der Sättigung der Signale bestimmt werden. Die Signale des bildgebenden Sensors 24 liegen dann als Sättigungssignale vor oder werden in der Konvertierungseinheit 40 in diese umgewandelt, aus welchen die Recheneinheit 42 mit aus der Optik und Bildverarbeitung bekannten Verfahren kontinuierlich ein Maß für die Schärfe des Druckbildes ermittelt und anschließend mit den gespeicherten Referenzwerten vergleicht.

Durch die meßtechnische Anzeige beider Abweichungen kann der Einrichtprozeß beschleunigt und objektiviert werden. Derzeit wird ein neuer Druck von kontinuierlichen Dekorbahnen so eingerichtet, daß immer wieder angehalten wird, Proben ausgeschnitten und visuell mit einer Referenz verglichen werden und iterativ die zahlreichen Einflußparameter so verstellt werden, bis schließlich eine passende Einstellung erreicht ist. Dieses Vorgehen ist langwierig und teuer und ist sehr stark vom Geschick der jeweiligen Person abhängig. Die schlußendliche Freigabe zum Druck ist nach wie vor wenig dokumentiert und risikoreich.

Bevorzugterweise werden alternativ oder zusätzlich zur separaten Anzeige 32 bzw. 48 der Abweichungsmaße das Farbabweichungsmaß und das Bildschärfeabweichungsmaß so kombiniert, daß ein daraus resultierendes Abweichungsmaß entsteht, welches der visuellen Farbabweichungswahrnehmung möglichst gut entspricht. Das Farbabweichungsmaß und das Bildschärfeabweichungsmaß werden durch eine mathematische Funktion, bevorzugt durch eine parametrisierbare mathematische Funktion, vorzugsweise durch ein Polynom, dessen Parameter experimentell bestimmt wurden, kombiniert.

Gemäß einer weiteren bevorzugten Variante werden die gemessenen Abweichungsmaße mit Toleranzschwellen verglichen. So ist es durch eine einfache Schwellwertoperation möglich, Farbvektoren automatisch auszuschließen, die zu selten vorkommen und damit als Störungen betrachtet werden können. Es können aber mittels der Toleranzschwellen auch Ausreißer entlang der Farbtonachse erkannt und von der Farbkontrolle ausgeschlossen werden, die beispielsweise durch das Hereinragen einer nicht zum Muster gehörigen andersfarbigen Zone wie eine Markierung oder ein Etikett bedingt sind.

Die oben beschriebene Überwachung des mehrfarbig gemusterten Drucks von Laminat-Dekorpapieren ist beispielhaft zu verstehen. Grundsätzlich gilt für alle mehrfarbig gemusterten Oberflächen, daß eine Veränderung des visuell wahrgenommenen Farbeindrucks auch von der Schärfe des mehrfarbig gemusterten Drucks abhängt. Der Erfindungsgedanke ist daher auf alle mehrfarbig gemusterten Oberflächen anwendbar, bei denen der visuelle Eindruck eng toleriert sein muß, unabhängig davon, ob sie drucktechnisch oder mittels anderer Verfahren hergestellt werden und unabhängig davon, aus welchen Materialien sie bestehen. Er läßt sich auch auf die Beurteilung und den Vergleich solcher Oberflächen anwenden, welche nicht technisch hergestellt, sondern natürlichen Ursprungs sind, wie z.B. Natursteine, Marmore, Naturhölzer, da auch hier der visuelle Farbeindruck von den Statistiken der Mehrfarbigkeit und der Schärfe der Musterung beeinflußt wird.

Die Erfindung ist nicht darauf beschränkt, lediglich die Farbhistogramme zur physikalischen Beurteilung der Farbabweichung neben der Bildschärfe zu messen. Es ist dem Fachmann der Farbbildverarbeitung bekannt, daß auch weitere Größen wie beispielsweise die örtliche Verteilung der zu einer gleichen Farbe gehörenden Musteranteile und die Formmerkmale der zu einer gleichen Farbe gehörenden Musterformen sowie deren Statistiken die visuelle Farbwahmehmung beeinflussen. Wesentlicher Gedanke der Erfindung ist es, daß die Bildschärfe des Musters mitgemessen wird, eine im eigentlichen Sinn eher geometrische Eigenschaft des Bildes, welche physikalisch nicht von diesen Farbeigenschaften abhängt, da sie vom visuellen System des menschlichen Beobachters nicht als geometrische Eigenschaft, sondern als Farbeigenschaft wahrgenommen wird.

## Patentansprüche

1. Verfahren zur meßtechnischen Erfassung der Unterschiede in dem visuell wahrgenommenen Farbeindruck zwischen einer mehrfarbig gemusterten Oberfläche (10) einer Referenz und einer mehrfarbig gemusterten Oberfläche (12) eines Prüflings,
- bei dem mit einem ortsauflösenden Sensor (24), der die zu beurteilende Oberfläche (12) des Prüflings erfaßt, Signale gewonnen werden, und
- anhand der gewonnenen Signale mindestens eines der folgenden, die Farbeigenschaften der mehrfarbig gemusterten Oberfläche (12) beschreibenden Merkmale bestimmt wird:
- eine statistische Beschreibung der Eigenschaften der aufgebrachten unterschiedlichen Farben,
- die geometrische Verteilung der auf der Oberfläche aufgebrachten unterschiedlichen Farben,
- Formmerkmale der jeweils zu einer Farbe gehörenden einfarbigen Elemente des mehrfarbigen Musters,
- Formmerkmale von visuell unterscheidbaren Elementen des mehrfarbigen Musters, und
- die Werte für die die Farbeigenschaften beschreibenden Merkmale des Prüflings mit den entsprechenden vorgegebenen Werten der Referenz verglichen werden, und
- diese Abweichungen zur meßtechnischen Beurteilung der visuell wahrnehmbaren Unterschiede in dem Farbeindruck als Abweichungsmaße angezeigt werden,
**dadurch gekennzeichnet, daß**
- gleichzeitig anhand der gewonnenen Signale die Bildschärfe der Muster bestimmt wird,
- die die Bildschärfe beschreibenden Werte des Prüflings mit den entsprechenden vorgegebenen Werten der Referenz verglichen werden, und
- diese Abweichungen zur meßtechnischen Beurteilung der visuell wahrnehmbaren Unterschiede in dem Farbeindruck als separate Abweichungsmaße angezeigt werden.

2. Verfahren zur meßtechnischen Erfassung der Unterschiede in dem visuell wahrgenommenen Farbeindruck zwischen einer mehrfarbig gemusterten Oberfläche (10) einer Referenz und einer mehrfarbig gemusterten Oberfläche (12) eines Prüflings,
- bei dem mit einem ortsauflösenden Sensor (24), der die zu beurteilende Oberfläche (12) des Prüflings erfaßt, Signale gewonnen werden, und
- anhand der gewonnenen Signale mindestens eines der folgenden, die Farbeigenschaften der mehrfarbig gemusterten Oberfläche (12) beschreibenden Merkmale bestimmt wird:
- eine statistische Beschreibung der Eigenschaften der aufgebrachten unterschiedlichen Farben,
- die geometrische Verteilung der auf der Oberfläche aufgebrachten unterschiedlichen Farben,
- Formmerkmale der jeweils zu einer Farbe gehörenden einfarbigen Elemente des mehrfarbigen Musters,
- Formmerkmale von visuell unterscheidbaren Elementen des mehrfarbigen Musters, und
- die Werte für die die Farbeigenschaften beschreibenden Merkmale des Prüflings mit den entsprechenden vorgegebenen Werten der Referenz verglichen werden,
**dadurch gekennzeichnet, daß**
- gleichzeitig anhand der gewonnenen Signale die Bildschärfe der Muster bestimmt wird,
- die die Bildschärfe beschreibenden Werte des Prüflings mit den entsprechenden vorgegebenen Werten der Referenz verglichen werden, und
- die Abweichungen der Werte für die die Farbeigenschaften beschreibenden Merkmale und die Abweichungen der die Bildschärfe beschreibenden Werte zur meßtechnischen Beurteilung der visuell wahrnehmbaren Unterschiede in dem Farbeindruck zu einem dem visuellen Farbeindruck entsprechenden gemeinsamen Abweichungsmaß kombiniert und angezeigt werden.

3. Verfahren nach Anspruch 1, **dadurch gekennzeichnet, daß** zusätzlich zur separaten Anzeige der Abweichungsmaße die Abweichungsmaße zu einem dem visuellen Farbeindruck entsprechenden gemeinsamen Abweichungsmaß kombiniert und angezeigt werden.

4. Verfahren nach Anspruch 2 oder 3, **dadurch gekennzeichnet, daß** die Kombination der die Farbeigenschaften erfassenden Messungen mit den Messungen der Bildschärfe durch eine parametrisierbare mathematische Funktion, vorzugsweise durch ein Polynom, geschieht, dessen Parameter experimentell bestimmt wurden.

5. Verfahren nach einem der Ansprüche 1 bis 4, **dadurch gekennzeichnet, daß** die gemessenen Abweichungsmaße mit Toleranzschwellen verglichen werden.

6. Verfahren nach einem der Ansprüche 1 bis 5, **dadurch gekennzeichnet, daß** die Bildschärfe aus der Helligkeit der Signale bestimmt wird.

7. Verfahren nach einem der Ansprüche 1 bis 5, **dadurch gekennzeichnet, daß** die Bildschärfe aus der Sättigung der Signale bestimmt wird.

8. Verfahren nach einem der vorhergehenden Ansprüche, **dadurch gekennzeichnet, daß** der ortsauflösende Sensor ein bildgebender Farbsensor (24) ist.

9. Anordnung zur meßtechnischen Erfassung der Unterschiede in dem visuell wahrgenommenen Farbeindruck zwischen einer mehrfarbig gemusterten Oberfläche (10) einer Referenz und einer mehrfarbig gemusterten Oberfläche (12) eines Prüflings, mit einer Lichtquelle (25) von im wesentlichen konstanter Intensität und spektraler Verteilung zur Beleuchtung der mehrfarbig gemusterten Oberfläche (12) des Prüflings, mit einem ortsauflösenden Sensor (24) zur Erfassung der beleuchteten Oberfläche (12), mit einer Recheneinheit (26), in welcher aus den Signalen des ortsauflösenden Sensors (24) meßtechnische Werte bestimmt werden, die die Farbeigenschaften der mehrfarbig gemusterten Oberfläche (12) beschreiben,
**dadurch gekennzeichnet, daß**
aus den Signalen des ortsauflösenden Sensors (24) ferner Werte bestimmt werden, die die Bildschärfe der mehrfarbig gemusterten Oberfläche (12) beschreiben, und daß jeweils eine Anzeigeeinheit (32, 48) zur Anzeige von Abweichungsmaßen vorgesehen ist, die durch einen Vergleich der die Farbeigenschaften beschreibenden Werte des Prüflings mit den entsprechenden vorgegebenen Werten der Referenz sowie der die Bildschärfe beschreibenden Werte des Prüflings mit den entsprechenden vorgegebenen Werten der Referenz gebildet werden.

10. Anordnung nach Anspruch 9, **dadurch gekennzeichnet, daß** eine Konvertierungseinheit (40) vorgesehen ist, die die Signale des bildgebenden Sensors (24) in Helligkeitssignale umwandelt.

11. Anordnung nach Anspruch 9, **dadurch gekennzeichnet, daß** eine Konvertierungseinheit (40) vorgesehen ist, die die Signale des bildgebenden Sensors (24) in Sättigungssignale umwandelt.

12. Anordnung nach einem der Ansprüche 9 bis 11, **dadurch gekennzeichnet, daß** mindestens eines der folgenden, die Farbeigenschaften der mehrfach gemusterten Oberfläche (12) beschreibenden Merkmale bestimmt wird:
- eine statistische Beschreibung der Eigenschaften der aufgebrachten unterschiedlichen Farben,
- die geometrische Verteilung der auf der Oberfläche aufgebrachten unterschiedlichen Farben,
- Formmerkmale der jeweils zu einer Farbe gehörenden einfarbigen Elemente des mehrfarbigen Musters,
- Formmerkmale von visuell unterscheidbaren Elementen des mehrfarbigen Musters.

13. Anordnung nach einem der Ansprüche 9 bis 12, **dadurch gekennzeichnet, daß** der ortsauflösende Sensor ein bildgebender Farbsensor (24) ist.

14. Anordnung nach einem der Ansprüche 9 bis 13, **dadurch gekennzeichnet, daß** die Lichtquelle (25) und der ortsauflösende Sensor (24) in einem Meßkopf (27) zusammengefaßt sind.

15. Anordnung nach Anspruch 14, **dadurch gekennzeichnet, daß** der Meßkopf (27) Kalibriereinrichtungen zur automatischen Rekalibrierung des Meßkopfes (27) aufweist.

16. Anordnung nach Anspruch 14 oder 15, **dadurch gekennzeichnet, daß** bei flachen bewegten bahnförmigen Produkten der Meßkopf (27) so dicht über der Oberfläche (10, 12) positioniert ist, daß kein die Messung verfälschendes Fremdlicht aus der Umgebung die beleuchtete Oberfläche (10, 12) erfaßt.

## Claims

1. A method of metrologically detecting the differences in the visually perceived color impression between a multi-color patterned surface (10) of a reference and a multi-color patterned surface (12) of a test item,
- in which signals are captured by means of a spatial resolution sensor (24) which detects the surface (12) to be evaluated of the test item, and
- at least one of the following features describing the color characteristics of the multi-color patterned surface (12) is determined by means of the signals captured:
- a statistical description of the characteristics of the different colors applied,
- the geometric distribution of the different colors applied on the surface,
- shape-related features of the single-colored elements, each pertaining to one respective color, of the multi-colored pattern,
- shape-related features of visually distinguishable elements of the multi-colored pattern, and
- the values for the features of the test item which describe the color characteristics are compared with the corresponding predefined values of the reference, and
these variations are displayed as variation rates for the metrological evaluation of the visually perceivable differences in the color impression,
**characterized in that**
- concomitantly the picture definition of the patterns is determined by means of the signals captured,
- the values of the test item which describe the picture definition are compared with the corresponding predefined values of the reference, and
these variations are displayed as separate variation rates for the metrological evaluation of the visually perceivable differences in the color impression.

2. A method of metrologically detecting the differences in the visually perceived color impression between a multi-color patterned surface (10) of a reference and a multi-color patterned surface (12) of a test item,
- in which signals are captured by means of a spatial resolution sensor (24) which detects the surface (12) to be evaluated of the test item, and
- at least one of the following features describing the color characteristics of the multi-color patterned surface (12) is determined by means of the signals captured:
- a statistical description of the characteristics of the different colors applied,
- the geometric distribution of the different colors applied on the surface,
- shape-related features of the single-colored elements, each pertaining to one respective color, of the multi-colored pattern,
- shape-related features of visually distinguishable elements of the multi-colored pattern, and
- the values for the features of the test item which describe the color characteristics are compared with the corresponding predefined values of the reference,
**characterized in that**
- concomitantly the picture definition of the patterns is determined by means of the signals captured,
- the values of the test item which describe the picture definition are compared with the corresponding predefined values of the reference, and
- the variations in the values for the features which describe the color characteristics and the variations in the values which describe the picture definition are combined to and displayed as a common variation rate which corresponds to the visual color impression for the metrological evaluation of the visually perceivable differences in the color impression.

3. The method according to claim 1, **characterized in that** in addition to the separate display of the variation rates, the variation rates are combined to and displayed as a common variation rate which corresponds to the visual color impression.

4. The method according to claim 2 or 3, **characterized in that** the combination of the measurements detecting the color characteristics with the measurements of the picture definition is effected by a parametrizable mathematical function, preferably by a polynomial, the parameters of which have been experimentally determined.

5. The method according to any one of claims 1 to 4, **characterized in that** the measured variation rates are compared with tolerance thresholds.

6. The method according to any one of claims 1 to 5, **characterized in that** the picture definition is determined from the intensity of the signals.

7. The method according to any one of claims 1 to 5, **characterized in that** the picture definition is determined from the saturation of the signals.

8. The method according to any of the preceding claims, **characterized in that** the spatial resolution sensor is an imaging color sensor (24).

9. An arrangement for the metrological detection of the differences in the visually perceived color impression between a multi-color patterned surface (10) of a reference and a multi-color patterned surface (12) of a test item, comprising a light source (25) of an essentially constant intensity and spectral distribution for illuminating the multi-color patterned surface (12) of the test item, a spatial resolution sensor (24) for detecting the illuminated surface (12), an arithmetic unit (26) in which metrological values describing the color characteristics of the multi-color patterned surface (12) are determined from the signals of the spatial resolution sensor (24),
**characterized in that**
further determined from the signals of the spatial resolution sensor (24) are values which describe the picture definition of the multi-color patterned surface (12), and that one display unit (32, 48) each is provided for displaying variation rates which are formed by a comparison of the values of the test item which describe the color characteristics with the corresponding predefined values of the reference, and of the values of the test item which describe the picture definition with the corresponding predefined values of the reference.

10. The arrangement according to claim 9, **characterized in that** a conversion unit (40) is provided which converts the signals of the imaging sensor (24) into intensity signals.

11. The arrangement according to claim 9, **characterized in that** a conversion unit (40) is provided which converts the signals of the imaging sensor (24) into saturation signals.

12. The arrangement according to any one of claims 9 to 11, **characterized in that** at least one of the following features describing the color characteristics of the multi-color patterned surface (12) is determined:
- a statistical description of the characteristics of the different colors applied,
- the geometric distribution of the different colors applied on the surface,
- shape-related features of the single-colored elements, each pertaining to one respective color, of the multi-colored pattern,
- shape-related features of visually distinguishable elements of the multi-colored pattern.

13. The arrangement according to any one of claims 9 to 12, **characterized in that** the spatial resolution sensor is an imaging color sensor (24).

14. The arrangement according to any one of claims 9 to 13, **characterized in that** the light source (25) and the spatial resolution sensor (24) are combined in a measuring head (27).

15. The arrangement according to claim 14, **characterized in that** the measuring head (27) has calibration means for automatic recalibration of the measuring head (27).

16. The arrangement according to claim 14 or 15, **characterized in that** with flat, moving products in the shape of a web, the measuring head (27) is positioned so close above the surface (10, 12) that no ambient stray light distorting the measurement will arrive at the illuminated surface (10, 12).

## Revendications

1. Procédé de détection métrologique des différences dans l'impression de couleurs visuellement perçue entre une surface (10) à motifs multicolores d'une référence et une surface (12) à motifs multicolores d'un échantillon à examiner,
- dans lequel des signaux sont obtenus au moyen d'un capteur (24) à résolution locale qui détecte la surface (12) à évaluer de l'échantillon à examiner, et
- au moins une des caractéristiques suivantes décrivant les propriétés de couleurs de la surface (12) à motifs multicolores est déterminée au moyen des signaux obtenus :
- une description statistique des propriétés des différentes couleurs appliquées,
- une répartition géométrique des différentes couleurs appliquées sur la surface,
- des caractéristiques de forme des éléments unis du motif multicolore, appartenant à une couleur,
- des caractéristiques de forme d'éléments visuellement discernables du motif multicolore, et
- les valeurs pour les caractéristiques de l'échantillon à examiner, qui décrivent les propriétés de couleurs, sont comparées avec des valeurs prédéterminées correspondantes de la référence, et
- ces déviations sont affichées en tant que mesures de déviation pour évaluer métrologiquement les différences visuellement perceptibles dans l'impression de couleurs,
**caractérisé en ce que**
- la netteté des motifs est déterminée simultanément à l'aide des signaux obtenus,
- les valeurs de la échantillon à examiner, qui décrivent la netteté, sont comparées avec les valeurs prédéterminées correspondantes de la référence, et
- ces déviations sont affichées en tant que mesures de déviation séparées pour évaluer métrologiquement les différences visuellement perceptibles dans l'impression de couleurs.

2. Procédé de détection métrologique des différences dans l'impression de couleurs visuellement perçue entre une surface (10) à motifs multicolores d'une référence et une surface (12) à motifs multicolores d'un échantillon à examiner,
- dans lequel des signaux sont obtenus au moyen d'un capteur (24) à résolution locale qui détecte la surface (12) à évaluer de la échantillon à examiner, et
- au moins une des caractéristiques suivantes décrivant les propriétés de couleurs de la surface (12) à motifs multicolores est déterminée au moyen des signaux obtenus :
- une description statistique des propriétés des différentes couleurs appliquées,
- une répartition géométrique des différentes couleurs appliquées sur la surface,
- des caractéristiques de forme des éléments unis du motif multicolore, appartenant à une couleur,
- des caractéristiques de forme d'éléments visuellement discernables du motif multicolore, et
- les valeurs pour les caractéristiques de l'échantillon à examiner, qui décrivent les propriétés de couleurs, sont comparées à des valeurs de la référence, prédéterminées de manière correspondante, et
**caractérisé en ce que**
- la netteté des motifs est déterminée simultanément à l'aide des signaux obtenus,
- ces déviations sont affichées en tant que mesures de déviation séparées pour évaluer métrologiquement les différences visuellement perceptibles dans l'impression de couleurs.
- les déviations des valeurs pour les caractéristiques qui décrivent les propriétés de couleurs et les déviations des valeurs qui décrivent la netteté sont combinées et affichées en tant qu'une mesure de déviation commune correspondant à l'impression de couleurs visuelle pour évaluer métrologiquement les différences visuellement perceptibles dans l'impression de couleurs.

3. Procédé selon la revendication 1, **caractérisé en ce que** additionnellement à l'affichage séparé des mesures de déviation, les mesures de déviation sont combinées et affichées en tant qu'une mesure de déviation commune correspondant à l'impression de couleurs visuelle.

4. Procédé selon la revendication 2 ou 3, **caractérisé en ce que** la combinaison des mesures détectant les propriétés de couleurs avec les mesures de la netteté a lieu par une fonction mathématique paramétrable, de préférence par un polynôme dont les paramètres ont été déterminés de façon expérimentale.

5. Procédé selon l'une des revendications 1 à 4, **caractérisé en ce que** les mesures de déviation mesurées sont comparées à des seuils de tolérance.

6. Procédé selon l'une des revendications 1 à 5, **caractérisé en ce que** la netteté est déterminée à partir de la luminance des signaux.

7. Procédé selon l'une des revendications 1 à 5, **caractérisé en ce que** la netteté est déterminée à partir de la saturation des signaux.

8. Procédé selon l'une des revendications précédentes, **caractérisé en ce que** le capteur à résolution locale est un capteur de couleurs (24) imageur.

9. Agencement de détection métrologique des différences dans l'impression de couleur visuellement perceptible entre une surface (10) à motifs multicolores d'une référence et une surface (12) à motifs multicolores d'un échantillon à examiner, comportant une source de lumière (25) d'intensité et de répartition spectrale sensiblement constantes pour éclairer la surface (12) à motifs multicolores de l'échantillon à examiner, comportant un capteur (24) à résolution locale pour détecter la surface (12) éclairée, comportant une unité arithmétique (26) dans laquelle à partir des signaux du capteur (24) à résolution locale sont déterminées des valeurs métrologiques qui décrivent les propriétés de couleurs de la surface (12) à motifs multicolores,
**caractérisé en ce que**
à partir des signaux du capteur (24) à résolution locale sont en outre déterminées des valeurs qui décrivent la netteté de la surface (12) à motifs multicolores, et **en ce qu'**il est prévu une unité d'affichage respective (32, 48) pour afficher des mesures de déviation qui sont formées par une comparaison des valeurs de l'échantillon à examiner, qui décrivent les propriétés de couleurs, avec les valeurs correspondantes prédéterminées de la référence ainsi que des valeurs de l'échantillon à examiner, qui décrivent la netteté, avec les valeurs correspondantes prédéterminées de la référence.

10. Agencement selon la revendication 9, **caractérisé en ce qu'**il est prévu une unité de conversion (40) qui convertit les signaux du capteur (24) imageur en des signaux de luminance.

11. Agencement selon la revendication 9, **caractérisé en ce qu'**il est prévu une unité de conversion (40) qui convertit les signaux du capteur (24) imageur en des signaux de saturation.

12. Agencement selon l'une des revendications 9 à 11, **caractérisé en ce qu'**au moins une des caractéristiques suivantes décrivant les propriétés de couleurs de la surface (12) à motifs multicolores est déterminée :
- une description statistique des propriétés des différentes couleurs appliquées,
- la répartition géométrique des différentes couleurs appliquées sur la surface,
- des caractéristiques de forme des éléments unis du motif multicolore, appartenant à une couleur,
- des caractéristiques de forme d'éléments visuellement discernables du motif multicolore.

13. Agencement selon l'une des revendications 9 à 12, **caractérisé en ce que** le capteur à résolution locale est un capteur de couleurs (24) imageur.

14. Agencement selon l'une des revendications 9 à 13, **caractérisé en ce que** la source de lumière (25) et le capteur à résolution locale (24) sont réunis dans une tête de mesure (27).

15. Agencement selon la revendication 14, **caractérisé en ce que** la tête de mesure (27) présente des moyens de calibrage pour recalibrer automatiquement la tête de mesure (27).

16. Agencement selon la revendication 14 ou 15, **caractérisé en ce que** dans le cas de produits plats en forme de bandes en mouvement, la tête de mesure (27) est positionnée si près au-dessus de la surface (10, 12) qu'aucune lumière parasite de l'environnement, qui fausse la mesure, n'atteint la surface (10, 12) éclairée.
